Europäisches Patentamt

European Patent Office

Office européen des brevets

(11) Publication number: **0 161 864**
**A1**

## EUROPEAN PATENT APPLICATION

(21) Application number: 85303065.8

(22) Date of filing: 30.04.85

(51) Int. Cl.⁴: **F 16 L 33/20**

(30) Priority: 15.05.84 GB 8412369

(43) Date of publication of application: 21.11.85
Bulletin 85/47

(84) Designated Contracting States: AT BE CH DE FR GB IT LI LU NL SE

(71) Applicant: GATES HYDRAULICS LIMITED, Station Road, St. Neots Cambridgeshire (GB)

(72) Inventor: Knight, Colin Harland, 1 The Causeway, Carlton Bedford (GB)
Inventor: Beal, Clifford John, 12 Plover Way, Bedford (GB)

(74) Representative: Carpmael, John William Maurice et al, CARPMAELS & RANSFORD 43 Bloomsbury Square, London, WC1A 2RA (GB)

(54) Hose end fitting.

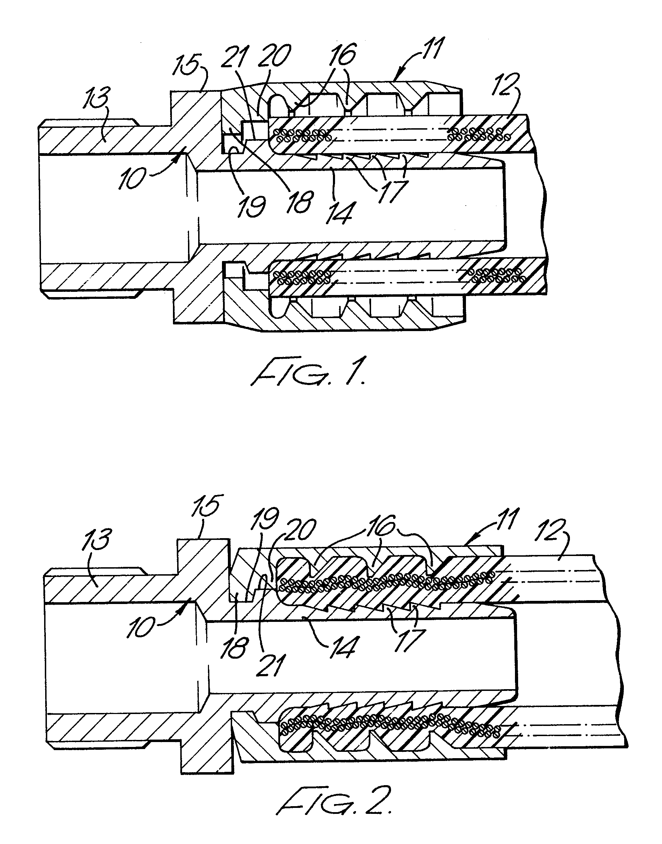

(57) An end fitting or coupling shown in Figure 1 comprises an insert member (10) and a ferrule (11) arranged to be attached to a hose (12). The insert member (10) comprises an external coupling portion (13) and an insert portion (14) joined by a flange portion (15). The ferrule (11) has teeth (16) adapted to grip the hose (12) and the insert portion (14) has teeth (17) for the same purpose. The ferrule (11) is provided with a latch portion (18) and an adjacent shoulder (20), the shoulder (20) being of greater diameter than the latch portion (18). The insert portion (14) is provided with a groove (19) adapted to receive the latch portion (18) and a surface (21) in the form of a rib adapted to be contracted by the shoulder (20). When the ferrule (11) is crimped onto the hose (12) the latch (18) enters the groove (19) so that the latch (18) is actually in full contact with the base surface of the groove (19). At the same time the shoulder (20) comes into full contact with the surface (21). The action of these two contact areas is to ensure that the ferrule (11) remains concentrically aligned with the insert member (10) when crimped onto the hose (12).

- 1 -

## HOSE END FITTING

This invention relates to hose end fittings such as couplings for joining two portions of a hose or couplings for attaching hoses to fluid outlets or inlets or end fittings which are used to join two lengths of hose of dissimilar diameters etc.

The invention has application particularly, but not exclusively to hose end fittings for use with high pressure hoses.

End fittings are known which comprise an insert member which enters the hose and a surrounding annular ferrule which is crimped onto the hose and on to the insert member so as to unite the end fitting with the end of the hose.

One problem with such end fittings which is particularly acute when dealing with high pressure hoses but also occurs with other hoses, is the maintenance of concentricity between the ferrule and the insert member. If concentricity is not maintained there is always a possibility of failure of the end fitting and consequent leakage from the hose.

An object of the invention is to provide a hose end fitting, and particularly a coupling for a high pressure hose, which includes special features to maintain concentricity between the end fitting and the ferrule during assembly.

In accordance with the present invention a hose end fitting comprises an insert member and an external ferrule, the ferrule having a latch portion adapted to enter a groove in the insert member, the ferrule also having a shoulder adjacent the latch portion adapted to contact a surface on the insert member adjacent the groove, whereby when the ferrule is crimped onto the insert member contact takes place between the latch portion and the base of the groove and contact also takes place between the shoulder and the said surface so as to maintain the ferrule in concentric relationship with the insert. Preferably, the said surface is on a rib formed on the insert member.

Preferably, the internal diameter of the shoulder is greater than the internal diameter of the latch portion.

Preferably, the latch and the shoulder are integral parts of the ferrule.

Preferably the ferrule is, before it is crimped on to the hose and shoulder, a separate and removable part of the coupling.

From another aspect the invention comprises a hose end fitting or coupling in combination with a high pressure hose, the coupling comprising an insert member which is entered into the end of the hose and a ferrule which is crimped onto the outside of the hose, so that the hose is gripped between the insert member and the ferrule, a ferrule having a latch portion which enters a groove in the insert member during crimping of the ferrule onto the hose, so as to make contact with the base of the groove, and the ferrule also having a shoulder adjacent the latch portion which engages a rib on the insert member, so that the concentricity is maintained between the insert member and the ferrule.

In the accompanying drawings:-

Figure 1 is a longitudinal section through a high pressure hose coupling or end fitting embodying the invention, the coupling being shown before it has been crimped onto the hose; and

Figure 2 shows the same coupling after it has been crimped onto the hose.

The coupling shown in Figure 1 comprises an insert member 10 and a ferrule 11 which are arranged to be attached to a hose 12 of the high pressure reinforced type. The insert member 10 comprises an external coupling portion 13 and an insert portion 14 joined by a flange portion 15. The ferrule 11 has teeth 16 adapted to grip the hose 12 and the insert portion 14 has teeth 17 for the same purpose. The ferrule 11 is provided with a latch portion 18 and an adjacent shoulder 20, the shoulder being of greater diameter than the latch portion 18. The insert portion 14 is provided with a groove 19 adapted to receive the latch portion 18 and a surface 21 in the form of a rib adapted to be contacted by the shoulder 20.

As shown in Figure 1 the ferrule which is a separate part to the insert member has not been crimped into position over the hose, although the hose has been inserted between the ferrule and the insert member. It will be noted that the latch portion 18 and shoulder 20 form integral parts of the ferrule. They may be cast integrally with the ferrule or machined into the ferrule.

When the ferrule is crimped onto the hose in the conventional manner the latch 18 enters the groove 19 as shown in Figure 2 so that the latch 18 is actually in full contact with the base surface of the groove 19. At the same time the shoulder 10 comes into full contact with the surface 21. The action of these two contact areas is to ensure that the ferrule remains concentrically aligned with the insert member when crimped onto the hose 12.

Although the ferrule is shown as a removable portion the geometry of the latch 18 and shoulder 20 could be changed so that the latch 18 is always partially engaged into the groove 19 thus retaining the ferrule loosely captive on the insert portion prior to assembly onto a hose.

The principle described above in relation to the illustrated embodiment could be used on other forms of end fitting or coupling and can be used with low or high pressure hoses although the maintenance of concentricity is particularly important in relation to high pressure hoses.

One reason why the end fitting of the present invention is so effective in maintaining concentricity is that grip takes place between the ferrule and the insert at two different diameters i.e. the smaller diameter of the annular groove in the insert and the larger diameter of the rib. This provides a much improved retention characteristic under impulse loading of the hose.

Existing hose end fittings of this general type are prone to longitudinal movement, relatively to the hose, when high transient pressures occur. This movement is normally undetectable visually but laboratory testing has shown that there is, with known hose end fittings, a limitation to a number of impulse cycles achievable before failure occurs.

An important additional advantage of the present invention is that the thickening of the latch portion and the additional contact provided by the adjacent rib and shoulder strengthens the latch in the longitudinal direction and so the coupling is less prone to longitudinal movement relatively to the hose when high transient or "impulse" pressures occur. Thus a hose fitting embodying the present invention provides much improved retention characteristics under impulse loading of the hose.

A recently introduced flexing test for hose end fittings consists of impulsing the hose assembly whilst flexing through a moving angle. This places a strain on the hose coupling joint which is quite severe and we have shown during laboratory tests that we can achieve

0161864

- 5 -

a far greater number of cycles with the double step shell. When flexing the ferrule tends to move in a direction diametrically opposed to the insert in a sidewards back and forth motion. The double step supports this motion far more satisfactorily than the normal single latch.

This has an enormous advantage especially with introduction of the new type testing and is totally unique.

If the hose assembly is installed in a situation whereby vibration or operation of a machine causes it to flex in a direction which is at 90° to the centre line of the hose, then this movement will only be contained if there is no movement between the ferrule and the insert. The double latch resists movement between the ferrule and the insert in an axial direction, and gives added rigidity between the ferrule and the insert. Thus the life of the assembly under vibratory or flexing conditions is extended.

- 6 -

Claims:

1.   A hose end fitting comprising an insert member (14)
and an external ferrule (11), the ferrule (11) having a
latch portion (18) adapted to enter a groove (19) in
the insert member characterised in that the ferrule also
has a shoulder (20) adjacent the latch portion adapted
to contact a surface (21) on the insert member adjacent
the groove, whereby when the ferrule (11) is crimped
onto the insert member (14) contact takes place between
the latch portion (18) and the base of the groove (19)
and contact also takes place between the shoulder (20)
and the said surface (21) so as to maintain the ferrule
in concentric relationship with the insert.

2.   A hose end fitting according to claim 1 and
characterised in that said surface (21) is on a rib
formed on the insert member.

3.   A hose end fitting according to claim 1 or claim 2
characterised in that the internal diameter of the
shoulder (20) is greater than the internal diameter
of the latch portion (18).

4.   A hose end fitting according to any preceding
claim characterised in that the latch (18) and the
shoulder (21) are integral of the ferrule.

5.   A hose end fitting according to any preceding
claim characterised in that the ferrule (11) is, before
it is crimped onto the hose and shoulder, a separate
and removable part of the coupling.

6.   A hose end fitting or coupling in combination with
a high pressure hose (12), the coupling comprising an
insert member (14) which is entered into the end of the
hose (12) and a ferrule (11) which is crimped onto the
the outside of the hose, so that the hose is gripped
between the insert member (14) and the ferrule (11),
the ferrule having a latch portion (18) which enters
a groove (19) in the insert member (14) during crimping of the ferrule (11) onto the hose, so as to make contact with the base of the groove characterised by the ferrule (11) also having a shoulder (20) adjacent the latch portion which engages a rib (21) on the insert member, so that the concentricity is maintained between the insert member and the ferrule.

7. A hose end fitting according to any preceding claim characterised in that the geometry of the latch and shoulder are such that the latch (18) is always at least partially engaged in the groove (19) thus retaining the ferrule loosely captive on the insert portion prior to assembly on to the hose.

FIG. 1.

FIG. 2.

European Patent
Office

**EUROPEAN SEARCH REPORT**

Application number

| | DOCUMENTS CONSIDERED TO BE RELEVANT | | EP 85303065.8 |
|---|---|---|---|

| Category | Citation of document with indication, where appropriate, of relevant passages | Relevant to claim | CLASSIFICATION OF THE APPLICATION (Int Cl 4) |
|---|---|---|---|
| X | DE - A1 - 3 201 461 (DUNLOP LTD.)<br>* Totality * | 1,2,4-7 | F 16 L 33/20 |
| X | DE - A1 - 2 626 608 (BTR INDU-STRIES LTD.)<br>* Totality * | 1,2,4-7 | |
| X | EP - A1 - 0 067 063 (UNILEVER PLC)<br>* Totality * | 1,2,4-7 | |
| X | GB - A - 2 046 388 (F. DUFFIELD PTY)<br>* Totality * | 1,2,4-7 | |
| X | US - A - 3 711 131 (EVANS)<br>* Totality * | 1,2,4-7 | TECHNICAL FIELDS SEARCHED (Int Cl 4)<br><br>F 16 L 33/00 |
| A | DE - B - 1 215 453 (K. EHLERS) | | |

The present search report has been drawn up for all claims

| Place of search | Date of completion of the search | Examiner |
|---|---|---|
| VIENNA | 18-07-1985 | SCHUGANICH |